# FASCICULE DE BREVET EUROPEEN

(11) **EP 2 901 652 B1**
(45) Date de publication et mention de la délivrance du brevet: **19.07.2017**
(21) Numéro de dépôt: 13774093.2
(22) Date de dépôt: 24.09.2013
(51) Int. Cl.: H04L 29/06

(54) **PROCÉDÉ DE SÉCURISATION D'UN CANAL DE TRANSMISSION DE DONNÉES DE VOIX ET DISPOSITIF DE SÉCURISATION ASSOCIÉ**
VERFAHREN ZUR SICHERUNG EINES SPRACHDATENÜBERTRAGUNGSKANALS UND ZUGEHÖRIGE SICHERUNGSVORRICHTUNG
METHOD FOR SECURING A VOICE DATA TRANSMISSION CHANNEL AND RELATED SECURITY DEVICE

(30) Priorité: 26.09.2012 FR 1202553
(43) Date de publication de la demande: 05.08.2015
(73) Titulaire: THALES, 92200 Neuilly-sur-Seine (FR)
(72) Inventeur: ALLARD, Fabien, F-92130 Issy les Moulineaux (FR)
(74) Mandataire: Lavoix
(86) Numéro de dépôt international: PCT/EP2013/069790
(87) Numéro de publication internationale: WO 2014/048900

(56) Documents cités:
- US-A1- 2007 165 638
- US-A1- 2009 170 475
- "Secure Voice on Cisco Integrated Services Routers", CISCO Data Sheet, 1 janvier 2010 (2010-01-01), pages 1-9, XP055071993, Extrait de l'Internet: URL:http://www.cisco.com/en/US/prod/collat eral/routers/ps259/product_data_sheet0900a ecd8016c784.pdf [extrait le 2013-07-18]

## Description

La présente invention concerne un procédé de sécurisation d'un canal de transmission de données entre au moins un réseau de départ et un réseau de destination à travers un réseau de transit d'un niveau de sécurité plus faible que les réseaux de départ et de destination,

les réseaux de départ et de destination ayant au préalable établi une connexion sécurisée selon un processus de traitement IPsec comprenant une politique de sécurité IPsec et mettant en oeuvre au moins un protocole IPsec,

les données comprenant des premières données et des secondes données, les premières données comprenant des données de voix et étant sécurisées par un protocole de sécurisation différent des protocoles du processus de traitement IPsec,

le procédé comprenant les étapes suivantes, lorsque les données sont transmises du réseau de départ vers le réseau de transit :
- si les données sont des secondes données, aiguillage des secondes données vers une étape de cryptage selon au moins un protocole IPsec du processus de traitement IPsec pour obtenir des secondes données cryptées ; et
- transmission des secondes données cryptées vers le réseau de transit.

L'invention s'applique, en particulier, à la transmission de données de voix, dans des environnements contraints, tels que, par exemple, des réseaux radio à bas débit, typiquement de quelques kilobits par seconde, ou des réseaux filaires dans lesquels les données transmises sont modulées tels que, par exemple, les réseaux RTC (pour Réseau Téléphonique Commuté).

Dans la suite, par « réseau de départ » et « réseau de destination », on entend des réseaux informatiques ayant des niveaux de sécurité élevés, tels que des réseaux locaux, par exemple des réseaux informatiques de type LAN (de l'anglais « Local Area Network »).

Dans la suite, par « réseau de transit », on entend un réseau ayant un niveau de sécurité plus faible que les réseaux de départ et de destination, tel que par exemple un réseau public d'un opérateur télécom.

Pour sécuriser un canal de communication entre deux réseaux sécurisés, à travers un réseau de transit de niveau de sécurité plus faible, il est connu de placer à la périphérie de chaque réseau sécurisé un dispositif de sécurisation, par exemple un chiffreur IP (de l'anglais « Internet Protocol »), de manière à chiffrer, respectivement déchiffrer, les données émises, respectivement reçues par ces réseaux. Ainsi, toutes les données émises par ces réseaux sont transmises à travers le réseau de transit sous une forme chiffrée, et aucune donnée issue de ces réseaux sécurisés ne transite en clair, c'est-à-dire sous une forme non chiffrée, sur le réseau de transit.

Il est également connu d'établir une connexion sécurisée entre deux réseaux sécurisés conformément à un processus de traitement IPsec comprenant une politique de sécurité IPsec (de l'anglais « Internet Protocol SECurity ») et mettant en oeuvre au moins un protocole IPsec.

Ce processus de traitement IPsec comprend un ensemble de protocoles et est défini dans la norme IETF RFC 4301. L'ensemble de protocoles IPsec est destiné à assurer des communications protégées sur des réseaux IP. Plus précisément, IPsec est un ensemble de protocoles utilisant des algorithmes permettant le transport de données sécurisées sur un réseau IP par l'utilisation de services de sécurité cryptographiques. IPsec est typiquement mis en oeuvre par un dispositif de sécurisation placé à la périphérie de chaque réseau sécurisé.

Dans ce qui suit, on entend par « protocole IPsec » un protocole faisant partie de l'ensemble de protocoles IPsec. Les protocoles IPsec opèrent à la couche réseau du modèle OSI (de l'anglais « Open System Interconnection »), c'est-à-dire à la couche 3.

Dans le protocole IPsec, une base de données, couramment appelée SPD (de l'anglais « Security Policy Database »), regroupe l'ensemble des comportements que le dispositif de sécurisation adopte par rapport à des communications externes telles que par exemple la transmission ou non de données entre des réseaux sécurisés. Cet ensemble de comportements est couramment appelé « politique de sécurité IPsec ».

Cette base de données sert à décider, lors de l'établissement d'une communication, si cette dernière doit, ou non, utiliser un protocole IPsec et de quelle façon cette dernière doit être sécurisée.

Dans la base de données SPD, les communications devant utiliser l'ensemble de protocoles IPsec sont définies par les informations disponibles à partir de l'en-tête IP des paquets de la communication.

Des fonctionnalités IPsec, couramment appelées associations de sécurité, sont ensuite associées à ces communications, suivant le type de sécurisation que l'on souhaite apporter à la connexion. Par exemple, si les données sont confidentielles, la base de données SPD spécifie qu'il faut utiliser l'association de sécurité ESP (de l'anglais «Encapsulating Security Payloads ») de sorte que les données transmises soient chiffrées. Si les données doivent être protégées en intégrité, l'association de sécurité AH (de l'anglais « Authentication Headers ») est utilisée.

L'ensemble des associations de sécurité IPsec, définies dans la base de données SPD, sont contenues dans une base de données communément appelée SAD (de l'anglais « Security Association Database »).

Dans la base de données SAD, une association de sécurité est identifiée de manière unique par un index de paramètre de sécurité, couramment appelé SPI (de l'anglais « Security Parameter Index »).

Par ailleurs, afin d'améliorer la performance des communications, il est connu d'utiliser des protocoles de sécurisation des communications différents suivant le type de données échangées. Typiquement, pour la transmission de données de voix, un autre type de protocoles est utilisé tel que, par exemple, le protocole SCIP (de l'anglais « Secure Communications Interoperability Protocol »), ou le protocole SRTP (de l'anglais « Secure Real-time Transport Protocol »). Ces protocoles sont adaptés pour sécuriser la transmission des données de voix, et permettent une communication fiable et sécurisée, en particulier dans des réseaux contraints. La sécurisation de la transmission de données de voix, par exemple par SCIP, consiste par exemple, dans le chiffrement les données de voix destinées à transiter entre les réseaux sécurisés. Ce type de protocoles opère typiquement à la couche application du modèle OSI, c'est-à-dire à la couche 7.

Lorsque des données de voix préalablement sécurisées par un protocole de sécurisation tel que SCIP sont émises par un réseau de départ et sont transmises vers un réseau de transit à travers un dispositif de sécurisation IPsec situé à l'interface entre le réseau de départ et le réseau de transit, ces dernières sont confrontées à la politique de sécurité IPsec contenue dans le dispositif de sécurisation. De façon classique, ces données de voix sécurisées sont reconnues par la politique de sécurité IPsec comme des données ne devant pas être protégées par un protocole IPsec afin d'éviter d'alourdir les trames de données. Par conséquent, ces données de voix sont transmises telles quelles au niveau de la couche réseau à laquelle opère IPsec vers le réseau de destination. A l'arrivée au réseau de destination, la politique de sécurité IPsec conduit soit à transmettre sans traitement les données de voix vers le réseau de destination (politique de sécurité IPsec « BYPASS »), soit à supprimer ces données de la pile IPsec et donc à ne pas les transmettre au réseau de destination (politique de sécurité IPsec « DISCARD »).

En pratique, les données de voix sont transmises vers le réseau de destination, ce qui constitue une faille de sécurité puisque le canal n'est pas contrôlé, avant de traverser les couches supérieures à la couche réseau.

Il existe donc un besoin pour un procédé de sécurisation d'un canal de transmission de données de voix sécurisées entre deux réseaux sécurisés à travers un réseau de transit d'un niveau de sécurité plus faible que les réseaux sécurisés, les réseaux sécurisés ayant au préalable établi une connexion sécurisée selon un processus de traitement IPsec.

A cet effet, est définie dans les revendications 1, 5, 9, 10 et 11. Des modes de réalisation particuliers sont définis dans les revendications dépendantes. L'invention a pour objet un procédé du type précité, caractérisé en ce que la politique de sécurité IPsec prévoit, dans le processus de traitement IPsec, un protocole de traitement IPsec propre à traiter les premières données,
et en ce qu'il comprend en outre les étapes suivantes :
- si les données sont des premières données, aiguillage des premières données vers une étape de codage selon le protocole de traitement IPsec du processus de traitement IPsec pour obtenir des premières données codées ; ledit protocole de traitement IPsec étant différent du ou de chaque protocole IPsec selon lequel les secondes données sont cryptées,
- transmission des premières données codées vers le réseau de transit.

Le procédé de sécurisation selon l'invention comprend en outre les caractéristiques suivantes, prises séparément ou en combinaison :
- il comporte, lorsqu'un paquet de premières données est transmis du réseau de départ vers le réseau de transit et préalablement à l'étape d'aiguillage du paquet de premières données, une étape d'ajout d'un en-tête audit paquet, ledit en-tête correspondant au protocole de sécurisation des premières données ;
- toutes les premières données passent par l'étape de codage ;
- l'étape de codage pour obtenir des premières données codées comprend une étape d'ajout d'un en-tête aux premières données.

L'invention a également pour objet un procédé de sécurisation d'un canal de transmission de données entre au moins un réseau de départ et un réseau de destination à travers un réseau de transit d'un niveau de sécurité plus faible que les réseaux de départ et de destination,
les réseaux de départ et de destination ayant au préalable établi une connexion sécurisée selon un processus de traitement IPsec comprenant une politique de sécurité IPsec et mettant en oeuvre au moins un protocole IPsec,
les données comprenant des premières données et des secondes données, les premières données comprenant des données de voix et étant sécurisées par un protocole de sécurisation différent des protocoles du processus de traitement IPsec,
le procédé comprenant les étapes suivantes, lorsque les données sont transmises du réseau de transit vers le réseau de destination :
- si les données sont des secondes données cryptées, aiguillage des secondes données cryptées vers une étape de décryptage selon au moins un protocole IPsec du processus de traitement IPsec pour obtenir des secondes données décryptées ;
- transmission des secondes données décryptées vers le réseau de destination ;
le procédé étant caractérisé en ce que la politique de sécurité IPsec prévoit, dans le processus de traitement IPsec, un protocole de traitement IPsec propre à traiter des premières données codées, et en ce qu'il comprend en outre les étapes suivantes :
- si les données sont des premières données codées, aiguillage des premières données codées vers une étape de décodage selon le protocole de traitement IPsec du processus de traitement IPsec pour obtenir des premières données décodées ; ledit protocole de traitement IPsec étant différent du ou de chaque protocole IPsec selon lequel les secondes données sont décryptées ;
- transmission des premières données décodées vers le réseau de destination.

Le procédé de sécurisation selon l'invention comprend en outre les caractéristiques suivantes, prises séparément ou en combinaison :
- toutes les premières données codées passent par l'étape de décodage ;
- l'étape de décodage pour obtenir des premières données décodées comprend une étape de suppression d'un en-tête des premières données codées.

L'invention a également pour objet un dispositif de sécurisation d'un canal de transmission de données entre au moins un réseau de départ et un réseau de destination à travers un réseau de transit d'un niveau de sécurité plus faible que les réseaux de départ et de destination,
les réseaux de départ et de destination ayant au préalable établi une connexion sécurisée selon un processus de traitement IPsec comprenant une politique de sécurité IPsec et mettant en oeuvre au moins un protocole IPsec,
les données comprenant des premières données et des secondes données, les premières données comprenant des données de voix et étant sécurisées par un protocole de sécurisation différent des protocoles du processus de traitement IPsec,
le dispositif comprenant, lorsque les données sont transmises du réseau de départ vers le réseau de transit :
- si les données sont des secondes données, des premiers moyens d'aiguillage des secondes données vers des moyens de cryptage selon au moins un protocole IPsec du processus de traitement IPsec pour obtenir des secondes données cryptées ; et
- des moyens de transmission des secondes données cryptées vers le réseau de transit ;
le dispositif étant caractérisé en ce que la politique de sécurité IPsec prévoit, dans le processus de traitement IPsec, un protocole de traitement IPsec propre à traiter les premières données, et en ce qu'il comprend en outre :
- si les données sont des premières données, des premiers moyens d'aiguillage des premières données vers des moyens de codage selon le protocole de traitement IPsec du processus de traitement IPsec pour obtenir des premières données codées ; ledit protocole de traitement IPsec étant différent du ou de chaque protocole IPsec selon lequel les secondes données sont cryptées,
- des moyens de transmission des premières données codées vers le réseau de transit.

Le dispositif de sécurisation selon l'invention comporte également les caractéristiques suivantes, prises séparément ou en combinaison :
- les moyens de codage comprennent des moyens d'ajout d'un en-tête aux premières données ;
- les moyens de cryptage comprennent des moyens de protection en intégrité des secondes données et des moyens de chiffrement des secondes données.

L'invention a également pour objet un dispositif de sécurisation d'un canal de transmission de données entre au moins un réseau de départ et un réseau de destination à travers un réseau de transit d'un niveau de sécurité plus faible que les réseaux de départ et de destination,
les réseaux de départ et de destination ayant au préalable établi une connexion sécurisée selon un processus de traitement IPsec comprenant une politique de sécurité IPsec et mettant en oeuvre au moins un protocole IPsec,
les données comprenant des premières données et des secondes données, les premières données comprenant des données de voix et étant sécurisées par un protocole de sécurisation différent des protocoles du processus de traitement IPsec,
le dispositif comprenant, lorsque les données sont transmises du réseau de transit vers le réseau de destination :
- si les données sont des secondes données cryptées, des deuxièmes moyens d'aiguillage des secondes données cryptées vers des moyens de décryptage selon au moins un protocole IPsec du processus de traitement IPsec pour obtenir des secondes données décryptées ;
- des moyens de transmission des secondes données décryptées vers le réseau de destination ;
le dispositif étant caractérisé en ce que la politique de sécurité IPsec prévoit, dans le processus de traitement IPsec, un protocole de traitement IPsec propre à traiter des premières données codées, et en ce qu'il comprend en outre :
- si les données sont des premières données codées, des deuxièmes moyens d'aiguillage des premières données codées vers des moyens de décodage selon le protocole de traitement IPsec du processus de traitement IPsec pour obtenir des premières données décodées ; ledit protocole de traitement IPsec étant différent du ou de chaque protocole IPsec selon lequel les secondes données sont décryptées ;
- des moyens de transmission des premières données décodées vers le réseau de destination.

Le dispositif de sécurisation selon l'invention comporte également les caractéristiques suivantes, prises séparément ou en combinaison :
- les moyens de décodage comprennent des moyens de suppression d'un en-tête des premières données codées ;
- les moyens de décryptage comprennent des moyens de contrôle d'intégrité des secondes données cryptées et des moyens de déchiffrement des secondes données cryptées.

L'invention a également pour objet un programme d'ordinateur caractérisé en ce qu'il comprend des instructions propres à mettre en oeuvre les étapes du procédé tel que décrit plus haut.

L'invention porte également sur un support de données sur lequel est enregistré le programme d'ordinateur tel que décrit plus haut.

L'invention porte également sur un trame de données propre à transiter dans un canal de transmission de données entre au moins un réseau de départ et un réseau de destination à travers un réseau de transit d'un niveau de sécurité plus faible que les réseaux de départ et de destination,
les réseaux de départ et de destination ayant au préalable établi une connexion sécurisée selon un processus de traitement IPsec comprenant une politique de sécurité IPsec et mettant en oeuvre au moins un protocole IPsec,
les données comprenant des premières données et des secondes données, les premières données comprenant des données de voix et étant sécurisées par un protocole de sécurisation différent du ou de chaque protocole du processus de traitement IPsec,
ladite trame comprenant successivement :
- un en-tête IP comprenant des adresses de source et de destination de la trame ;
- un en-tête IPsec correspondant à un protocole IPsec du processus de traitement IPsec ;
- un en-tête indiquant au moins un port de destination de la trame ; et
- les données ;
ladite trame étant caractérisée en ce que la politique de sécurité IPsec prévoit, dans le processus de traitement IPsec, un protocole de traitement IPsec propre à traiter les premières données et en ce que l'en-tête IPsec correspond audit protocole de traitement IPsec ;
e n ce que les données de la trame sont des premières données ; et
e t en ce que la trame comprend en outre un en-tête correspondant au protocole de sécurisation des premières données, situé entre l'en-tête indiquant le ou chaque port de destination et les premières données.

La trame de données selon l'invention comporte également la caractéristique selon laquelle l'en-tête IPsec comprend :
- un identifiant du protocole de traitement IPsec ;
- une identification correspondant au ou à chaque port de destination ; et
- la longueur totale de la trame.

L'invention sera davantage comprise au regard d'exemples de réalisation de l'invention qui vont maintenant être décrits en faisant référence aux figures annexées parmi lesquelles :
- la figure 1 est un schéma illustrant l'architecture globale de réseaux adaptés à la mise en oeuvre du procédé selon l'invention ;
- la figure 2 est un schéma d'un dispositif de sécurisation selon l'invention, placé en coupure entre un réseau de départ et un réseau de transit ou entre un réseau de transit et un réseau de destination et adapté pour mettre en oeuvre les étapes du procédé selon l'invention ;
- la figure 3 est un synoptique illustrant les étapes du procédé selon l'invention, lorsque les données sont transmises du réseau de départ vers le réseau de transit ;
- la figure 4 est un synoptique illustrant les étapes du procédé selon l'invention, lorsque les données sont transmises du réseau de transit vers le réseau de destination ; et
- la figure 5 est une représentation simplifiée des formats d'une trame d'un paquet de données lors des étapes du procédé selon l'invention, lorsque les données sont transmises du réseau de départ vers le réseau de transit.

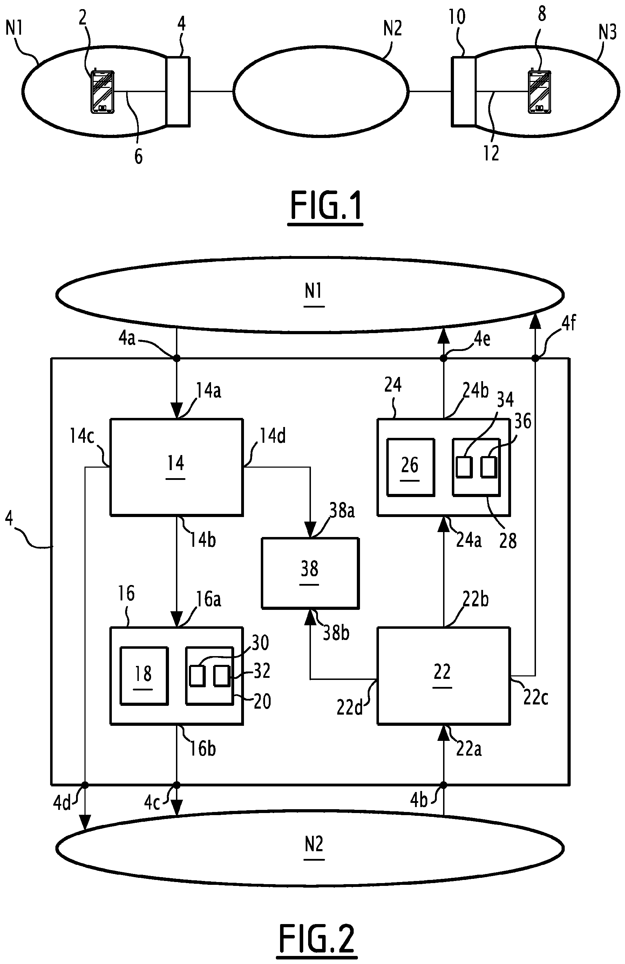

On a représenté sur la figure 1 l'architecture globale de réseaux adaptés à la mise en oeuvre du procédé selon un mode de réalisation de l'invention.

Deux réseaux de télécommunications sécurisés N1 et N3, appelés ensuite réseau de départ N1 et réseau de destination N3, sont propres à communiquer à travers un réseau N2 de transit, de niveau de sécurité plus faible que les réseaux sécurisés N1 et N3. Une connexion sécurisée est établie entre le réseau N1 et le réseau N3, selon un processus de traitement IPsec. Le processus de traitement IPsec comprend une politique de sécurité IPsec et met en oeuvre au moins un protocole IPsec.

Les réseaux sécurisés N1 et N3 sont par exemple des réseaux locaux tels que des réseaux internes d'entreprise, et le réseau de transit N2 un réseau public tel qu'un réseau public d'un opérateur télécom ou tel qu'Internet.

Le réseau N1 de départ comprend au moins un terminal émetteur 2 et un dispositif de sécurisation 4, relié par une liaison 6 filaire ou sans fil au terminal émetteur 2.

Le terminal émetteur 2, par exemple un téléphone portable, est propre à échanger des données, notamment des données de voix, avec le réseau N2 de transit et le réseau N3 de destination par l'intermédiaire du dispositif de sécurisation 4.

Le dispositif de sécurisation 4 est en coupure entre le réseau N1 de départ et le réseau N2 de transit, de sorte que toutes les données échangées entre le terminal émetteur 2 et le réseau N2 de transit passent obligatoirement par le dispositif de sécurisation 4.

Le dispositif de sécurisation 4 est propre à chiffrer des données émises par le terminal émetteur 2 et à transmettre ces données, une fois chiffrées, vers le réseau N3 de destination à travers le réseau N2 de transit.

De plus, le dispositif de sécurisation 4 est propre à recevoir des données chiffrées émises par le réseau N3 de destination à travers le réseau N2 de transit vers le terminal émetteur 2 et à transmettre ces données au terminal émetteur 2 après un déchiffrement de ces données. Plus précisément, le dispositif de sécurisation 4 est propre à déchiffrer des données chiffrées émises par le réseau N3 de destination et à transmettre les données déchiffrées au terminal émetteur 2.

Ce dispositif de sécurisation 4 sera décrit plus en détail en référence à la figure 2.

Le réseau N3 de destination comprend au moins un terminal récepteur 8 et un dispositif de sécurisation 10, relié par une liaison 12 filaire ou sans fil au terminal récepteur 8.

Le terminal récepteur 8, par exemple un téléphone portable, est propre à échanger des données avec le réseau N2 de transit et le réseau N3 de destination par l'intermédiaire du dispositif de sécurisation 10.

Le dispositif de sécurisation 10 est disposé en coupure entre le réseau N2 de transit et le réseau N3 de destination, de sorte que toutes les données échangées entre le terminal émetteur 2 et le réseau N2 de transit passent obligatoirement par le dispositif de sécurisation 10. La structure et le fonctionnement du dispositif 10 sont identiques à ceux du dispositif de sécurisation 4 du réseau N1 de départ.

La figure 2 illustre, de manière simplifiée, la structure d'un dispositif de sécurisation 4 mettant en oeuvre le procédé selon l'invention.

Le dispositif 4 est installé en coupure entre le réseau de départ N1 et le réseau de transit N2. Il comporte, du réseau N1 vers le réseau N2, un premier module d'aiguillage 14 et un premier module de traitement IPsec 16 comprenant un module de codage 18 et un module de cryptage 20.

Symétriquement, du réseau N2 vers le réseau N1, le dispositif 4 comporte un deuxième module d'aiguillage 22, un second module de traitement IPsec 24 comprenant un module de décodage 26 et un module de décryptage 28.

Le module de cryptage 20 comprend un module de protection en intégrité 30 et un module de chiffrement 32. Le module de protection en intégrité 30 met en oeuvre le protocole AH et le module de chiffrement 32 met en oeuvre le protocole ESP.

Le module de décryptage 28 comprend un module de contrôle d'intégrité 34 et un module de déchiffrement 36. Le module de contrôle d'intégrité 34 met en oeuvre le protocole AH et le module de déchiffrement 36 met en oeuvre le protocole ESP.

Le dispositif comporte entre outre un module de suppression de données 38.

Le dispositif de sécurisation 4 comporte une première entrée 4a reliée au réseau de départ N1, une deuxième entrée 4b reliée au réseau de transit N2, une première sortie 4c et une deuxième sortie 4d reliées au réseau de transit N2, une troisième sortie 4e et une quatrième sortie 4f reliée au réseau de départ N1.

Le premier module d'aiguillage 14 comprend une entrée 14a et trois sorties 14b, 14c, et 14d, l'entrée 14a étant connectée à la première entrée 4a du dispositif 4. La deuxième sortie 14c du premier module d'aiguillage 14 est directement connectée à la deuxième sortie 4d du dispositif 4. La troisième sortie 14d du premier module d'aiguillage 14 est connectée au module de suppression de données 38.

Le deuxième module d'aiguillage 22 comprend une entrée 22a et trois sorties 22b, 22c et 22d, l'entrée 22a étant connectée à la deuxième entrée 4b du dispositif 4. La deuxième sortie 22c du deuxième module d'aiguillage 22 est directement connectée à la quatrième sortie 4f du dispositif 4. La troisième sortie 22d du deuxième module d'aiguillage 22 est connectée au module de suppression de données 38.

Le premier module de traitement IPsec 16 comprend une entrée 16a connectée à la première sortie 14b du premier module d'aiguillage 14, et une sortie 16b reliée à la première sortie 4c du dispositif 4.

Le second module de traitement 24 comprend une entrée 24a connectée à la première sortie 22b du deuxième module d'aiguillage 22, et une sortie 24b reliée à la troisième sortie 4e du dispositif 4.

Le module de suppression de données 38 comprend deux entrées 38a et 38b, une première entrée 38a connectée à la troisième sortie 14d du premier module d'aiguillage 14, et une deuxième entrée 38b connectée à la troisième sortie 22d du deuxième module d'aiguillage 22.

Le premier module d'aiguillage 14 est propre à recevoir des données émises par le réseau de départ N1 vers le réseau de transit N2 en direction du réseau de destination N3, et à analyser ces données pour déterminer si celles-ci doivent être transmises ou non à destination du réseau de transit N2. Par exemple, le premier module d'aiguillage 14 est propre à analyser les métadonnées associées à ces données par le protocole de transport utilisé, et à déterminer, à partir de ces métadonnées, la nature des données émises par le réseau de départ N1. Ces métadonnées sont par exemple les métadonnées du protocole IPsec relatives à la couche réseau du modèle OSI, comprenant les adresses IP, les numéros de protocole des terminaux émetteur 2 et récepteur 8 et les ports de communication employés.

Le premier module d'aiguillage 14 comprend la base de donnés SPD et les moyens de mise en oeuvre de la politique de sécurité IPsec. Le premier module d'aiguillage 14 détermine quelles données doivent être transmises vers le réseau de transit N2 en fonction de la politique de sécurité prédéfinie et contenue dans la base de données SPD.

Le premier module d'aiguillage 14 est propre à aiguiller les données vers le module de suppression 38 de données si celles-ci ne doivent pas atteindre le réseau de transit N2.

Par ailleurs, le premier module d'aiguillage 14 est propre à envoyer les données directement vers la deuxième sortie 4d du dispositif 4, si celles-ci doivent être transmises vers le réseau de transit N2 sans traitement IPsec.

Enfin, le premier module d'aiguillage 14 est en outre propre à aiguiller les données vers le premier module de traitement IPsec 16 si celles-ci doivent être traitées avant d'être transmises vers le réseau de transit N2.

Le module de codage 18 est propre à coder des premières données comprenant des données de voix. Plus précisément, le module de codage est propre à appliquer un en-tête aux données de voix. Cet en-tête sera dénommé par la suite « SVHP » (de l'anglais « Secure Voice Header Protocol »).

Le module de suppression 38 de données est propre à supprimer les données si celles-ci ne doivent pas être transmises vers le réseau de transit N2.

Le deuxième module d'aiguillage 22 est propre à recevoir des données émises par exemple par le réseau de destination N3 vers le réseau de transit N2 en direction du réseau de départ N1. Ces données sont par exemple des données chiffrées émises par le réseau de destination N3, via le dispositif de sécurisation 4. Le deuxième module d'aiguillage 22 est ainsi propre à aiguiller les données et à analyser ces données pour déterminer si celles-ci doivent être transmises ou non vers le réseau N1.

Le deuxième module d'aiguillage 22 est ainsi propre à aiguiller les données vers le module de suppression de données 38 si celles-ci ne doivent pas atteindre le réseau N1, à aiguiller les données directement vers la quatrième sortie 4f du dispositif 4 si celles-ci doivent être transmises vers le réseau N1 sans traitement IPsec, et à aiguiller les données vers le deuxième module de traitement IPsec 24 si celles-ci doivent être traitées avant d'être transmises vers le réseau N1. Le deuxième module de traitement IPsec 24 comprend un module de décodage 26 et un module de décryptage 28. Le module de décodage 26 est propre à décoder les premières données comprenant les données de voix. Plus précisément, le module de décodage est propre à supprimer l'en-tête SVHP des premières données. Le module de décryptage 28 comprend un module de contrôle d'intégrité 34 et un module de déchiffrement 36, respectivement propres à contrôler l'intégrité selon le protocole AH et à déchiffrer selon le protocole ESP les données transmises depuis le réseau N2.

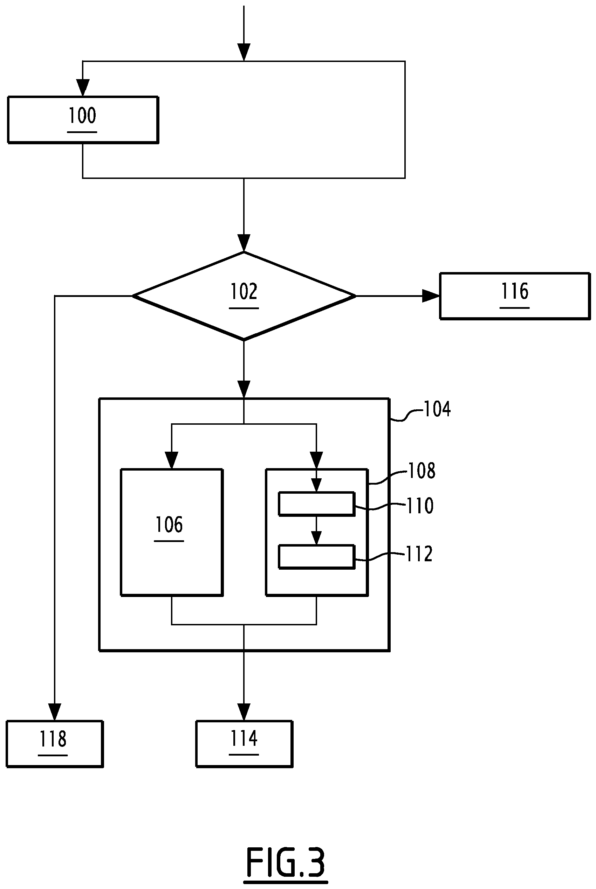

On a représenté sur la figure 3 un synoptique illustrant les étapes mises en oeuvre par le dispositif de sécurisation 4 lorsqu'il reçoit un paquet de premières données comprenant des données de voix, et un paquet de secondes données autres que des données de voix, émis par réseau de départ N1, par exemple par le terminal émetteur 2.

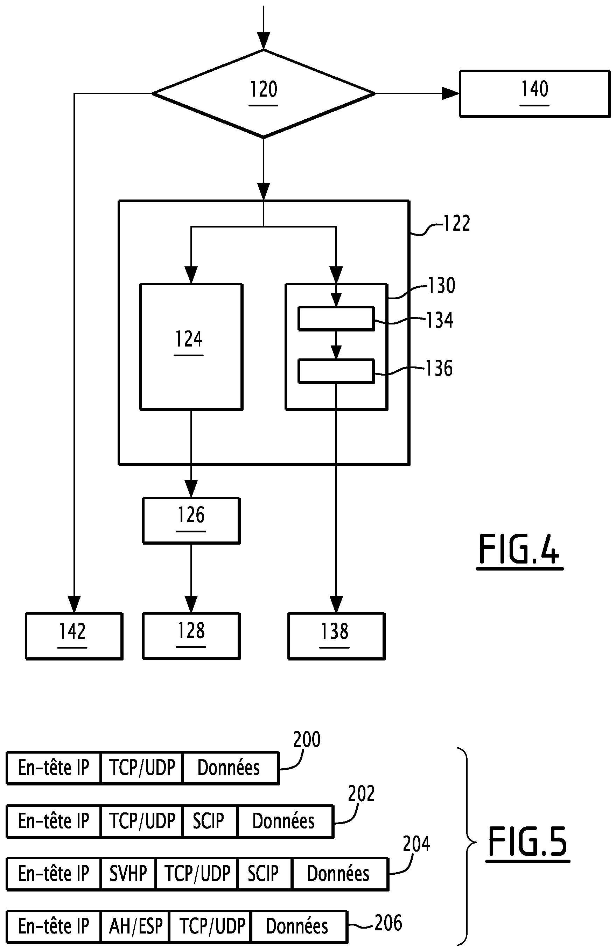

Initialement, les paquets de premières données présentent une trame telle que représentée et désignée par la référence 200 sur la figure 5. La trame 200 comprend un en-tête IP comprenant les adresses de source et de destination de la trame, un en-tête indiquant les ports de communication (TCP/UDP) employés, et les premières données.

Lors d'une première étape de cryptage 100, le paquet de premières données est crypté par exemple par le terminal 2 selon un protocole de sécurisation différent des protocoles IPsec et optimisé pour protéger les données de voix dans des réseaux contraints, tel que par exemple le protocole SCIP. Lors de la première étape de cryptage, un en-tête SCIP est ajouté aux premières données. La trame d'un paquet de premières données cryptées par le protocole SCIP est représentée et désignée par la référence 202 sur la figure 5. A l'instar de la trame 200, la trame 202 comprend un en-tête IP comprenant les adresses de source et de destination de la trame, un en-tête indiquant les ports de communication (TCP/UDP) employés, et les premières données. La trame 202 comprend en outre un en-tête SCIP.

Les données de voix et les secondes données sont reçues par le premier module d'aiguillage 14. Dans une étape d'aiguillage 102, ce dernier analyse les données pour déterminer si celles-ci doivent être transmises ou non vers le réseau N2 et pour déterminer si un protocole IPsec doit être appliqué ou non aux données devant être transmises vers le réseau N2 selon la politique de sécurité mémorisée dans la SPD.

Selon l'invention, la politique de sécurité IPsec prévoit, dans le processus de traitement IPsec, un protocole de traitement IPsec, tel que le protocole SVHP, propre à traiter des premières données. Le protocole SVHP est différent des protocoles AH et ESP.

Si les données sont des données de voix préalablement cryptées par le protocole SCIP, le premier module d'aiguillage 14 les envoie, lors de l'étape d'aiguillage 102, vers le module de codage 18 du premier module de traitement IPsec 16.

Lors d'une étape de traitement IPsec 104, les données de voix sécurisées sont codées selon le protocole IPsec SVHP par le module de codage 18 lors d'une étape 106 de codage. Plus précisément, lors de l'étape 106 de codage, le module de codage 18 ajoute un en-tête SVHP aux paquets de données de voix sécurisés par le protocole SCIP. Aucun autre traitement ou chiffrement n'est effectué suivant un protocole IPsec puisque les données sont déjà chiffrées par le protocole SCIP.

La trame d'un paquet de premières données codées est représentée et désignée par la référence 204 sur la figure 5. La trame de données 204 est propre à transiter dans le canal de transmission de données entre le réseau N1 et le réseau N3 à travers le réseau N2.

Selon l'invention, la trame 204 comprend successivement un en-tête IP comprenant des adresses de source et de destination de la trame 204, un en-tête IPsec correspondant au protocole de traitement IPsec, un en-tête indiquant au moins un port de destination de la trame 204 (TCP/UDP), et les premières données. La trame 204 comprend en outre un en-tête correspondant au protocole SCIP, situé entre l'en-tête indiquant le ou chaque port de destination et les premières données.

Avantageusement, l'en-tête IPsec comprend un identifiant SPI du protocole SVHP, une identification correspondant à chaque port de destination, tel que par exemple un numéro d'identification, et la longueur totale de la trame.

Selon l'invention, toutes les données de voix émises par le réseau de départ N1 passent par le module de codage 18 pour être codées puis transmises dans le réseau de transit N2.

Les premières données codées sont ensuite transmises lors d'une étape 114 de transmission vers le réseau N2.

Si les données sont des secondes données, c'est-à-dire autres que des données de voix, le premier module d'aiguillage 14 les envoie, lors de l'étape d'aiguillage 102, vers le module de cryptage 20 du premier module de traitement IPsec 16. Lors d'une étape de cryptage 108, le module de cryptage 20 chiffre les secondes données lors d'une étape 110 de chiffrement, et/ou protège en intégrité les secondes données lors d'une étape 112 de protection en intégrité. La trame d'un paquet de secondes données cryptées est représentée et désignée par la référence générale 206 sur la figure 5.

L'étape 110 de chiffrement est réalisée selon un protocole IPsec tel que, par exemple, le protocole ESP.

L'étape 112 de protection en intégrité est réalisée selon un protocole IPsec, tel que, par exemple, le protocole AH.

Ensuite, lors d'une étape 114 de transmission des secondes données cryptées, le premier module de traitement IPsec 16 transmet ces secondes données cryptées vers le réseau N2 de transit.

Les données ne devant pas être transmises vers le réseau de transit N2 sont supprimées lors d'une étape de suppression 116 des données.

Les données devant être transmises vers le réseau de transit N2 sans passer par l'étape de traitement IPsec 104 sont directement transmises vers le réseau N2 lors d'une étape 118 de transmission.

On a par ailleurs représenté sur la figure 4 un synoptique illustrant les étapes mises en oeuvre par le dispositif de sécurisation 10 lorsqu'il reçoit des données émises par le réseau N1 vers le réseau N3 à travers le réseau N2, à la suite d'une émission de données telle que décrite en référence à la figure 3.

Les données sont reçues par le deuxième module d'aiguillage 22. Dans une étape d'aiguillage 120, celui-ci analyse les données pour déterminer si elles doivent être transmises ou non vers réseau N3 et pour déterminer si un protocole IPsec doit être appliqué ou non aux données devant être transmises vers le réseau N3.

Selon l'invention, la politique de sécurité IPsec prévoit, dans le processus de traitement IPsec, un protocole de traitement IPsec propre à traiter les premières données codées.

Si les données sont des premières données cryptées par le protocole SCIP et codées par le protocole SVHP, ces dernières contiennent l'en-tête SVHP. Le deuxième module d'aiguillage 22 envoie ces dernières vers le module de décodage 26 du deuxième module de traitement IPsec 24 du fait de la présence de l'en-tête SVHP. Lors d'une deuxième étape de traitement IPsec 122, les premières données codées sont décodées selon le protocole IPsec SVHP par le module de décodage 26 lors d'une étape de décodage 124. Plus précisément, lors de l'étape 124 de décodage, le module de décodage 26 supprime l'en-tête SVHP des premières données codées et les envoie directement vers la couche application du modèle OSI à laquelle opère le protocole de sécurisation SCIP.

Selon l'invention, toutes les premières données codées passent par l'étape de décodage 124.

Une fois que les premières données décodées sont transmises dans le réseau de destination N3, celles-ci sont décryptées lors d'une étape de décryptage 126 selon le protocole SCIP au niveau de la couche 7. Plus précisément, lors de l'étape de décryptage des premières données, l'en-tête correspondant au protocole SCIP est supprimé des premières données de sorte que ces dernières sont ensuite transmises en clair dans le réseau de destination N3 lors d'une étape 128 de transmission de premières données décryptées.

Si les données sont des secondes données, le premier module d'aiguillage 14 les envoie vers le deuxième module de traitement IPsec 24. Lors d'une étape de décryptage 130, le module de décryptage 28 déchiffre les secondes données chiffrées lors d'une étape 132 de déchiffrement et/ou effectue un contrôle d'intégrité des secondes données lors d'une étape 134 de contrôle d'intégrité, puis transmet ces données déchiffrées vers le réseau N3 de destination lors d'une étape 136 de transmission. Ainsi, les secondes données transitent en clair dans le réseau N3.

Les données ne devant pas être transmises vers le réseau de transit N3 sont supprimées lors d'une étape de suppression 138 des données.

Les données devant être transmises vers le réseau de transit N2 sans passer par l'étape de traitement IPsec 122 sont directement transmises vers le réseau N2 lors d'une étape 142 de transmission.

Le procédé de sécurisation selon l'invention est avantageusement mis en oeuvre par un seul et même programme d'ordinateur. Le programme d'ordinateur comprend des instructions propres à mettre en oeuvre les étapes du procédé selon l'invention. En outre, le programme d'ordinateur est avantageusement enregistré sur un support de données.

On comprend de la description qui précède comment le procédé et le dispositif selon l'invention permettent d'améliorer la sécurité de la transmission de données telles que des données de voix entre des réseaux sécurisés communiquant à travers un réseau de sécurité plus faible.

Notamment, le codage de toute donnée de voix préalablement sécurisée par le protocole de sécurisation, par exemple SCIP, entre le réseau N1 et le réseau N2 permet d'orienter systématiquement celle-ci depuis la couche réseau vers la couche application à laquelle opère le protocole de sécurisation. On évite ainsi que cette donnée de voix puisse être considérée comme un vecteur d'attaque des couches comprises entre la couche réseau, à laquelle opère le protocole IPsec, et la couche application, à laquelle opère le protocole de sécurisation.

Par ailleurs, le procédé et le dispositif selon l'invention permettent d'exploiter le mode tunnel d'IPsec, et de sécuriser les communications tant entre des terminaux qu'entre des réseaux comprenant chacun une pluralité de terminaux.

Notamment, selon d'autres modes de réalisation, le procédé de sécurisation est mis en oeuvre entre plus de deux réseaux sécurisés, à travers plusieurs réseaux de niveaux de sécurité plus faibles, chacun des réseaux sécurisés étant équipés d'au moins un dispositif de sécurisation selon l'invention.

## Revendications

1. Procédé de sécurisation d'un canal de transmission de données entre au moins un réseau de départ (N1) et un réseau de destination (N3) à travers un réseau de transit (N2) d'un niveau de sécurité plus faible que les réseaux de départ et de destination,
les réseaux de départ et de destination ayant au préalable établi une connexion sécurisée selon un processus de traitement IPsec comprenant une politique de sécurité IPsec et mettant en oeuvre au moins un protocole IPsec,
les données comprenant des premières données et des secondes données, les premières données comprenant des données de voix et étant sécurisées par un protocole de sécurisation différent des protocoles du processus de traitement IPsec,
le procédé comprenant les étapes suivantes, lorsque les données sont transmises du réseau de départ (N1) vers le réseau de transit (N2) :
- si les données sont des secondes données, aiguillage (102) des secondes données vers une étape de cryptage (108) selon au moins un protocole IPsec du processus de traitement IPsec pour obtenir des secondes données cryptées ; et
- transmission (114) des secondes données cryptées vers le réseau (N2) de transit ;
le procédé comprenant une politique de sécurité IPSec prévoyant dans le processus de traitement IPsec, un protocole de traitement IPsec propre à traiter les premières données, et le procédé comprenant en outre les étapes suivantes, lorsque les données sont des premières données :
- ajouter d'un en-tête aux paquets correspondant aux premières données, ledit en-tête correspondant au protocole de sécurisation des premières données de manière à obtenir des première données sécurisées ;
- aiguillage (102) des premières données sécurisées vers une étape (106) de codage selon le protocole de traitement IPsec du processus de traitement IPsec pour obtenir des premières données codées, ledit protocole de traitement IPsec étant différent du ou de chaque protocole IPsec selon lequel les secondes données sont cryptées et consistant à ajouter un en-tête aux premières données sécurisées ;
- transmission (114) des premières données codées vers le réseau (N2) de transit.

2. Procédé selon la revendication 1, **caractérisé en ce que** toutes les premières données passent par l'étape de codage (106).

3. Procédé selon la revendication 1 ou la revendication 2, **caractérisé en ce qu'**il comprend les étapes suivantes, lorsque les données sont transmises du réseau de transit (N2) vers le réseau de destination (N3) :
- si les données sont des secondes données cryptées, aiguillage (120) des secondes données cryptées vers une étape de décryptage (126) selon au moins un protocole IPsec du processus de traitement IPsec pour obtenir des secondes données décryptées ;
- transmission (136) des secondes données décryptées vers le réseau de destination ;
le procédé étant **caractérisé en ce que** la politique de sécurité IPsec prévoit, dans le processus de traitement IPsec, un protocole de traitement IPsec propre à traiter des premières données codées, et **en ce qu'**il comprend en outre les étapes suivantes, lorsque les données sont des premières données codées :
- aiguillage (120) des premières données codées vers une étape de décodage (124) selon le protocole de traitement IPsec du processus de traitement IPsec pour obtenir des premières données décodées, ledit protocole de traitement IPsec étant différent du ou de chaque protocole IPsec selon lequel les secondes données sont décryptées et consistant à supprimer l'en-tête des premières données codées ;
- transmission (128) des premières données décodées vers le réseau (N1) de destination.

4. Procédé selon la revendication 3, **caractérisé en ce que** toutes les premières données codées passent par l'étape de décodage (124).

5. Dispositif de sécurisation (4) d'un canal de transmission de données entre au moins un réseau de départ (N1) et un réseau de destination (N3) à travers un réseau de transit (N2) d'un niveau de sécurité plus faible que les réseaux de départ et de destination,
les réseaux de départ et de destination ayant au préalable établi une connexion sécurisée selon un processus de traitement IPsec comprenant une politique de sécurité IPsec et mettant en oeuvre au moins un protocole IPsec,
les données comprenant des premières données et des secondes données, les premières données comprenant des données de voix et étant sécurisées par un protocole de sécurisation différent des protocoles du processus de traitement IPsec,
le dispositif comprenant, lorsque les données sont transmises du réseau de départ (N1) vers le réseau de transit (N2) :
- si les données sont des secondes données, des premiers moyens d'aiguillage (14) des secondes données vers des moyens de cryptage (20) selon au moins un protocole IPsec du processus de traitement IPsec pour obtenir des secondes données cryptées ; et
- des moyens de transmission des secondes données cryptées vers le réseau (N2) de transit ;
le dispositif comprenant une politique de sécurité IPsec prévoyant dans le processus de traitement IPsec, un protocole de traitement IPsec propre à traiter les premières données, et le dispositif comprenant en outre, lorsque les données sont des premières données :
- des moyens d'ajout d'un en-tête aux paquets correspondant aux premières données de manière à obtenir des première données sécurisée ;
- des premiers moyens d'aiguillage (14) des premières données sécurisées vers des moyens de codage (18) selon le protocole de traitement IPsec du processus de traitement IPsec pour obtenir des premières données codées ; ledit protocole de traitement IPsec étant différent du ou de chaque protocole IPsec selon lequel les secondes données sont cryptées et consistant à ajouter un en-tête aux premières données sécurisées ;
- des moyens de transmission des premières données codées vers le réseau de transit (N2).

6. Dispositif selon la revendication 5, **caractérisé en ce que** les moyens de cryptage (20) comprennent des moyens de protection en intégrité (30) des secondes données et des moyens de chiffrement (32) des secondes données.

7. Dispositif selon la revendication 5 ou la revendication 6, lorsque les données sont transmises du réseau de transit (N2) vers le réseau de destination (N3) :
- si les données sont des secondes données cryptées, des deuxièmes moyens d'aiguillage (22) des secondes données cryptées vers des moyens de décryptage (28) selon au moins un protocole IPsec du processus de traitement IPsec pour obtenir des secondes données décryptées ;
- des moyens de transmission des secondes données décryptées vers le réseau de destination ;
le dispositif étant **caractérisé en ce que** la politique de sécurité IPsec prévoit, dans le processus de traitement IPsec, un protocole de traitement IPsec propre à traiter des premières données codées, et **en ce qu'**il comprend en outre, , lorsque les données sont des premières données codées :
- des deuxièmes moyens d'aiguillage (22) des premières données codées vers des moyens de décodage (26) selon le protocole de traitement IPsec du processus de traitement IPsec pour obtenir des premières données décodées ; ledit protocole de traitement IPsec étant différent du ou de chaque protocole IPsec selon lequel les secondes données sont décryptées et consistant à supprimer l'en-tête des premières données codées, les moyens de décodage (26) comprennent des moyens de suppression d'un en-tête des premières données codées ;
- des moyens de transmission des premières données décodées vers le réseau de destination (N1).

8. Dispositif selon l'une quelconque des revendications 5 à 7, **caractérisé en ce que** les moyens de décryptage (28) comprennent des moyens de contrôle d'intégrité (34) des secondes données cryptées et des moyens de déchiffrement (36) des secondes données cryptées.

9. Programme d'ordinateur **caractérisé en ce qu'**il comprend des instructions propres à mettre en oeuvre les étapes du procédé selon l'une quelconque des revendications 1 à 4.

10. Support de données sur lequel est enregistré le programme d'ordinateur selon la revendication 9.

11. Trame (204) de données propre à transiter dans un canal de transmission de données entre au moins un réseau de départ (N1) et un réseau de destination (N3) à travers un réseau de transit (N2) d'un niveau de sécurité plus faible que les réseaux de départ et de destination,
les réseaux de départ et de destination ayant au préalable établi une connexion sécurisée selon un processus de traitement IPsec comprenant une politique de sécurité IPsec et mettant en oeuvre au moins un protocole IPsec,
les données comprenant des premières données et des secondes données, les premières données comprenant des données de voix et étant sécurisées par un protocole de sécurisation différent du ou de chaque protocole du processus de traitement IPsec,
ladite trame comprenant successivement :
- un en-tête IP comprenant des adresses de source et de destination de la trame ;
- un en-tête IPsec correspondant à un protocole IPsec du processus de traitement IPsec ;
- un en-tête indiquant au moins un port de destination de la trame ; et
- les données ;
ladite trame (204) étant telle que la politique de sécurité IPsec prévoit, dans le processus de traitement IPsec, un protocole de traitement IPsec propre à traiter les premières données et en ce que l'en-tête IPsec correspond audit protocole de traitement IPsec ;
les données de la trame étant des premières données ; et la trame (204) comprenant en outre un en-tête correspondant au protocole de sécurisation des premières données, situé entre l'en-tête indiquant le ou chaque port de destination et les premières données.

12. Trame (204) de données selon la revendication 11, **caractérisée en ce que** l'en-tête IPsec comprend :
- un identifiant du protocole de traitement IPsec ;
- une identification correspondant au ou à chaque port de destination ; et
- la longueur totale de la trame (204).

## Patentansprüche

1. Verfahren zum Sichern eines Datenübertragungskanals zwischen mindestens einem Startnetzwerk (N1) und einem Zielnetzwerk (N3) über ein Transitnetzwerk (N2) mit einem schwächeren Sicherheitsniveau als das Startnetzwerk und das Zielnetzwerk,
wobei das Startnetzwerk und das Zielnetzwerk vorab eine Verbindung aufgebaut haben, die gemäß einem IPsec-Verarbeitungsprozess gesichert ist, der eine IPsec-Sicherheitsrichtlinie aufweist und mindestens ein IPsec-Protokoll umsetzt,
wobei die Daten erste Daten und zweite Daten aufweisen, wobei die ersten Daten Sprachdaten aufweisen und durch ein Sicherungsprotokoll gesichert sind, das unterschiedlich ist von den Protokollen des IPsec-Verarbeitungsprozesses,
wobei das Verfahren die folgenden Schritte aufweist, wenn die Daten von dem Startnetzwerk (N1) zu dem Transitnetzwerk (N2) übertragen werden:
- Wenn die Daten zweite Daten sind, Leiten (102) der zweiten Daten zu einem Verschlüsselungsschritt (108) gemäß mindestens einem IPsec-Protokoll des IPsec-Verarbeitungsprozesses zum Erhalten von verschlüsselten zweiten Daten; und
- Übertragung (114) der verschlüsselten zweiten Daten zu dem Transitnetzwerk (N2);
wobei das Verfahren eine IPsec-Sicherheitsrichtlinie aufweist, die in dem IPsec-Verarbeitungsprozess ein IPsec-Verarbeitungsprotokoll vorsieht, das dazu geeignet ist, die ersten Daten zu verarbeiten,
und wobei das Verfahren außerdem die folgenden Schritte aufweist, wenn die Daten erste Daten sind:
- Hinzufügen eines Nachrichtenkopfs zu den Paketen, die den ersten Daten entsprechen, wobei der Nachrichtenkopf dem Sicherungsprotokoll der ersten Daten entspricht, um die ersten gesicherten Daten zu erhalten;
- Leiten (102) der ersten gesicherten Dan an einen Kodierschritt (106) gemäß dem IPsec-Verarbeitungsprotokoll des IPsec-Verarbeitungsprozesses zum Erhalten von ersten kodierten Daten, wobei das IPsec-Verarbeitungsprotokoll verschieden ist von dem oder jedem IPsec-Protokoll, gemäß dem die zweiten Daten verschlüsselt werden und darin besteht, dass ein Nachrichtenkopf zu den ersten gesicherten Daten hinzugefügt wird;
- Übertragung (114) der ersten kodierten Daten zu dem Transitnetzwerk (N2).

2. Verfahren gemäß Anspruch 1, dadurch charakterisiert, dass alle der ersten Daten den Kodierschritt (106) durchlaufen.

3. Verfahren gemäß Anspruch 1 oder Anspruch 2, dadurch charakterisiert, dass es die folgenden Schritte aufweist, wenn die Daten von dem Transitnetzwerk (N2) zu dem Zielnetzwerk (N3) übertragen werden:
- wenn die Daten die zweiten verschlüsselten Daten sind, Leiten (120) der zweiten verschlüsselten Daten an einen Entschlüsselungsschritt (126) gemäß mindestens einem IPsec-Protokoll des IPsec-Verarbeitungsprozesses zum Erhalten der zweiten entschlüsselten Daten;
- Übertragung (136) der zweiten entschlüsselten Daten zu dem Zielnetzwerk;
wobei das Verfahren dadurch charakterisiert ist, dass die IP-Sicherheitsrichtlinie ein IPsec-Verarbeitungsprotokoll vorsieht, das dazu geeignet ist, erste kodierte Daten zu verarbeiten und dadurch, dass es außerdem die folgenden Schritte aufweist, wenn die Daten erste kodierte Daten sind:
- Leiten (120) der ersten kodierten Daten an einen Dekodierschritt (124) gemäß dem IPsec-Verarbeitungsprotokoll zum Erhalten von ersten dekodierten Daten, wobei das IPsec-Verarbeitungsprotokoll verschieden ist von dem oder jedem IPsec-Protokoll, gemäß dem die zweiten Daten entschlüsselt werden, und aus dem Löschen des Nachrichtenkopfs der kodierten ersten Daten besteht;
- Übertragung (128) der ersten dekodierten Daten zu dem Zielnetzwerk (N1).

4. Verfahren gemäß dem Anspruch 3, dadurch charakterisiert, dass alle die ersten kodierten Daten den Dekodierschritt (124) durchlaufen.

5. Vorrichtung (4) zum Sichern eines Datenübertragungskanals zwischen mindestens einem Startnetzwerk (N1) und einem Zielnetzwerk (N3) über ein Transitnetzwerk (N2) mit einem schwächeren Sicherheitsniveau als das Startnetzwerk und das Zielnetzwerk,
wobei das Startnetzwerk und das Zielnetzwerk vorab eine Verbindung aufgebaut haben, die gemäß einem IPsec-Verarbeitungsprozess gesichert ist, der eine IPsec-Sicherheitsrichtlinie aufweist und mindestens ein IPsec-Protokoll umsetzt,
wobei die Daten erste Daten und zweite Daten aufweisen, wobei die ersten Daten Sprachdaten aufweisen und durch ein Sicherungsprotokoll gesichert sind, das unterschiedlich ist von den Protokollen des IPsec-Verarbeitungsprozesses,
wobei die Vorrichtung, wenn die Daten von dem Startnetzwerk (N1) zu dem Transitnetzwerk (N2) übertragen werden, aufweist:
- Wenn die Daten zweite Daten sind, erste Mittel zum Leiten (14) der zweiten Daten zu Mitteln zum Verschlüsseln (20) gemäß mindestens einem IPsec-Protokoll des IPsec-Verarbeitungsprozesses zum Erhalten von verschlüsselten zweiten Daten; und
- Mittel zur Übertragung der verschlüsselten zweiten Daten zu dem Transitnetzwerk (N2);
wobei die Vorrichtung eine IPsec-Sicherheitsrichtlinie aufweist, die in dem IPsec-Verarbeitungsprozess ein IPsec-Verarbeitungsprotokoll vorsieht, das dazu geeignet ist, die ersten Daten zu verarbeiten,
und wobei die Vorrichtung außerdem aufweist, wenn die Daten erste Daten sind:
- Mittel zum Hinzufügen eines Nachrichtenkopfs zu den Paketen, die den ersten Daten entsprechen, wobei der Nachrichtenkopf dem Sicherungsprotokoll der ersten Daten entspricht, um die ersten gesicherten Daten zu erhalten;
- Mittel zum Leiten (14) der ersten gesicherten Dan an Mittel zum Kodieren (18) gemäß dem IPsec-Verarbeitungsprotokoll des IPsec-Verarbeitungsprozesses zum Erhalten von ersten kodierten Daten, wobei das IPsec-Verarbeitungsprotokoll verschieden ist von dem oder jedem IPsec-Protokoll, gemäß dem die zweiten Daten verschlüsselt werden und darin besteht, dass ein Nachrichtenkopf zu den ersten gesicherten Daten hinzugefügt wird;
- Mittel zum Übertragen der ersten kodierten Daten zu dem Transitnetzwerk (N2).

6. Vorrichtung gemäß Anspruch 5, dadurch charakterisiert, dass die Mittel zum Verschlüsseln Mittel zum Schutz der Integrität (30) der zweiten Daten und Mittel zum Chiffrieren (32) der zweiten Daten aufweisen.

7. Vorrichtung gemäß Anspruch 5 oder Anspruch 6, wenn die Daten von dem Transitnetzwerk (N2) zu dem Zielnetzwerk (N3) übertragen werden:
- wenn die Daten die zweiten verschlüsselten Daten sind, zweite Mittel zum Leiten (220) der zweiten verschlüsselten Daten an Mittel zum Entschlüsseln (28) gemäß mindestens einem IPsec-Protokoll des IPsec-Verarbeitungsprozesses zum Erhalten der zweiten entschlüsselten Daten;
- Mittel zum Übertragen der zweiten entschlüsselten Daten zu dem Zielnetzwerk;
wobei die Vorrichtung dadurch charakterisiert ist, dass die IP-Sicherheitsrichtlinie ein IPsec-Verarbeitungsprotokoll vorsieht, das dazu geeignet ist, erste kodierte Daten zu verarbeiten und dadurch, dass sie außerdem aufweist, wenn die Daten erste kodierte Daten sind:
- zweite Mittel zum Leiten (22) der ersten kodierten Daten an Mittel zum Dekodieren (26) gemäß dem IPsec-Verarbeitungsprotokoll zum Erhalten von ersten dekodierten Daten, wobei das IPsec-Verarbeitungsprotokoll verschieden ist von dem oder jedem IPsec-Protokoll, gemäß dem die zweiten Daten entschlüsselt werden, und aus dem Löschen des Nachrichtenkopfs der kodierten ersten Daten besteht, wobei die Mittel zum Dekodieren (26) Mittel zum Unterdrücken eines Nachrichtenkopfs der ersten kodierten Daten aufweisen;
- Mittel zum Übertragen der ersten dekodierten Daten zu dem Zielnetzwerk (N1).

8. Vorrichtung gemäß einem der Ansprüche 5 bis 7, dadurch charakterisiert, dass die Entschlüsselungsmittel (28) Mittel zum Kontrollieren der Integrität (34) der zweiten verschlüsselten Daten und Mittel zum Dechiffrieren (36) der zweiten verschlüsselten Daten aufweisen.

9. Computerprogramm, dadurch charakterisiert, dass es Befehle aufweist, die dazu geeignet sind, die Schritte des Verfahrens gemäß einem der Ansprüche 1 bis 4 auszuführen.

10. Datenträger, auf dem das Computerprogramm gemäß Anspruch 9 gespeichert ist.

11. Daten-Frame (204), der dazu geeignet ist, in einem Datenübertragungskanal zwischen mindestens einem Startnetzwerk (N1) und einem Zielnetzwerk (N3) über ein Transitnetzwerk (N2) mit einem schwächeren Sicherheitsniveau als das Startnetzwerk und das Zielnetzwerk, befördert zu werden,
wobei das Startnetzwerk und das Zielnetzwerk vorab eine Verbindung aufgebaut haben, die gemäß einem IPsec-Verarbeitungsprozess gesichert ist, der eine IPsec-Sicherheitsrichtlinie aufweist und mindestens ein IPsec-Protokoll umsetzt,
wobei die Daten erste Daten und zweite Daten aufweisen, wobei die ersten Daten Sprachdaten aufweisen und durch ein Sicherungsprotokoll gesichert sind, das unterschiedlich ist von den Protokollen des IPsec-Verarbeitungsprozesses,
wobei der Daten-Frame aufeinanderfolgend aufweist:
- Einen IP-Nachrichtenkopf, der eine Quellenadresse und eine Zieladresse des Frames aufweist;
- einen IPsec-Nachrichtenkopf, der einem IPsec-Protokoll des IPsec-Verarbeitungsprozesses entspricht;
- einen IPsec-Nachrichtenkopf, der mindestens einen Zielport des Frames angibt; und
- die Daten;
wobei der Frame (204) dergestalt ist, dass die IPsec-Sicherheitsrichtlinie in dem IPsec-Verarbeitungsprozess ein IPsec-Verarbeitungsprotokoll vorsieht, das dazu geeignet ist, die ersten Daten zu verarbeiten, und dadurch, dass der IPsec-Nachrichtenkopf dem IPsec-Verarbeitungsprotokoll entspricht;
wobei die Daten des Frames erste Daten sind; und
der Frame (204) außerdem einen Nachrichtenkopf aufweist, der dem Sicherungsprotokoll der ersten Daten entspricht, der sich zwischen dem Nachrichtenkopf, der den oder jeden Zielport anzeigt, und den Daten befindet.

12. Daten-Frame (204) gemäß Anspruch 11, dadurch charakterisiert, dass der IPsec-Nachrichtenkopf aufweist:
- einen Identifikator des IPsec-Verarbeitungsprotokolls;
- eine Identifikation, die dem oder jedem Zielport entspricht; und
- die Gesamtlänge des Frames (204).

## Claims

1. Method for securing a data transmission channel between at least one source network (N1) and a destination network (N3) across a transit network (N2) having a lower security level than the source and destination networks,
the source and destination networks having established a secured connection beforehand in accordance with an IPsec processing process comprising an IPsec security policy and implementing at least one IPsec protocol,
the data comprising first data and second data, the first data comprising voice data and being secured by a security protocol that is different from the protocols of the IPsec processing process,
the method comprising the following steps when the data is transmitted from the source network (N1) to the transit network (N2):
- if the data is second data, switching (102) the second data to a step of encryption (108) in accordance with at least one IPsec protocol of the IPsec processing process in order to obtain encrypted second data; and
- transmitting (114) the encrypted second data to the transit network (N2);
the method comprising an IPsec security policy providing, in the IPsec processing process, an IPsec processing protocol suitable for processing the first data,
and the method further comprising the following steps when the data is first data:
- adding a header to the packets corresponding to the first data, said header corresponding to the security protocol of the first data in order to obtain secured first data;
- switching (102) the secured first data to a step (106) of encoding in accordance with the IPsec processing protocol of the IPsec processing process in order to obtain encoded first data, said IPsec processing protocol being different from the or each IPsec protocol in accordance with which the second data is encrypted and consisting in adding a header to the secured first data;
- transmitting (114) the encoded first data to the transit network (N2).

2. Method as claimed in claim 1, **characterised in that** all the first data passes via the encoding step (106).

3. Method as claimed in claim 1 or claim 2, **characterised in that** it comprises the following steps when the data is transmitted from the transit network (N2) to the destination network (N3):
- if the data is encrypted second data, switching (120) the encrypted second data to a step of decryption (126) in accordance with at least one IPsec protocol of the IPsec processing process in order to obtain decrypted second data;
- transmitting (136) the decrypted second data to the destination network;
the method being **characterised in that** the IPsec security policy provides, in the IPsec processing process, an IPsec processing protocol suitable for processing the encoded first data and **in that** it further comprises the following steps when the data is encoded first data:
- switching (120) the encoded first data to a step of decoding (124) in accordance with the IPsec processing protocol of the IPsec processing process in order to obtain decoded first data, said IPsec processing protocol being different from the or each IPsec protocol in accordance with which the second data is decrypted and consisting in removing the header of the encoded first data;
- transmitting (128) the decoded first data to the destination network (N1).

4. Method as claimed in claim 3, **characterised in that** all the encoded first data passes via the decoding step (124).

5. Device (4) for securing a data transmission channel between at least one source network (N1) and a destination network (N3) across a transit network (N2) having a lower security level than the source and destination networks,
the source and destination networks having established a secured connection beforehand in accordance with an IPsec processing process comprising an IPsec security policy and implementing at least one IPsec protocol,
the data comprising first data and second data, the first data comprising voice data and being secured by a security protocol that is different from the protocols of the IPsec processing process,
the device comprising, when the data is transmitted from the source network (N1) to the transit network (N2):
- if the data is second data, first means for switching (14) the second data to encryption means (20) in accordance with at least one IPsec protocol of the IPsec processing process in order to obtain encrypted second data; and
- means for transmitting the encrypted second data to the transit network (N2);
the device comprising an IPsec security policy providing, in the IPsec processing process, an IPsec processing protocol suitable for processing the first data, and the device further comprising, when the data is first data:
- means for adding a header to the packets corresponding to the first data in order to obtain secured first data;
- first means for switching (14) the secured first data to an encoding means (18) in accordance with the IPsec processing protocol of the IPsec processing process in order to obtain encoded first data, said IPsec processing protocol being different from the or each IPsec protocol in accordance with which the second data is encrypted and consisting in adding a header to the secured first data;
- means for transmitting encoded first data to the transit network (N2).

6. Device as claimed in claim 5, **characterised in that** the encryption means (20) comprise means for protecting the integrity (30) of the second data and means for encrypting (32) the second data.

7. Device as claimed in claim 5 or claim 6, when the data is transmitted from the transit network (N2) to the destination network (N3):
- if the data is encrypted second data, second means for switching (22) the encrypted second data to decryption means (28) in accordance with at least one IPsec protocol of the IPsec processing process in order to obtain decrypted second data;
- means for transmitting the decrypted second data to the destination network;
the device being **characterised in that** the IPsec security policy provides, in the IPsec processing process, an IPsec processing protocol suitable for processing encoded first data and **in that** it further comprises, when the data is encoded first data:
- second means for switching (22) the encoded first data to decoding means (26) in accordance with the IPsec processing protocol of the IPsec processing process in order to obtain decoded first data, said IPsec processing protocol being different from the or each IPsec protocol in accordance with which the second data is decrypted and consisting in removing the header of the encoded first data, the decoding means (26) comprising means for removing a header of the encoded first data;
- means for transmitting decoded first data to the destination network (N1).

8. Device as claimed in any one of claims 5 to 7, **characterised in that** the decryption means (28) comprise means for checking the integrity (34) of the encrypted second data and means for decrypting (36) the encrypted second data.

9. Computer programme, **characterised in that** it comprises instructions suitable for implementing the steps of the method as claimed in any one of claims 1 to 4.

10. Data support on which the computer programme as claimed in claim 9 is registered.

11. Data frame (204) suitable for transmission in a data transmission channel between at least one source network (N1) and a destination network (N3) across a transit network (N2) having a lower security level than the source and destination networks,
the source and destination networks having established a secured connection beforehand in accordance with an IPsec processing process comprising an IPsec security policy and implementing at least one IPsec protocol,
the data comprising first data and second data, the first data comprising voice data and being secured by a security protocol that is different from the or each protocol of the IPsec processing process,
said frame successively comprising:
- an IP header comprising the source and destination addresses of the frame;
- an IPsec header corresponding to an IPsec protocol of the IPsec processing process;
- a header indicating at least one destination port of the frame; and
- the data;
said frame (204) being such that the IPsec security policy provides, in the IPsec processing process, an IPsec processing protocol suitable for processing the first data and in that the IPsec header corresponds to said IPsec processing protocol;
the frame data being first data; and
the frame (204) further comprising a header corresponding to the security protocol of the first data, located between the header indicating the or each destination port and the first data.

12. Data frame (204) as claimed in claim 11, **characterised in that** the IPsec header comprises:
- an identifier of the IPsec processing protocol;
- an identification corresponding to the or each destination port; and
- the total length of the frame (204).
